Europäisches Patentamt

European Patent Office

Office européen des brevets

(19)

(11) Veröffentlichungsnummer: **0 025 180**
**B1**

(12) **EUROPÄISCHE PATENTSCHRIFT**

(45) Veröffentlichungstag der Patentschrift:
28.09.83

(21) Anmeldenummer: 80105077.4

(22) Anmeldetag: 27.08.80

(51) Int. Cl.³: **B 60 C 21/02**

(54) Pflaster für die Reparatur von Fahrzeugreifen.

(30) Priorität: 07.09.79 DE 2936165

(43) Veröffentlichungstag der Anmeldung:
18.03.81 Patentblatt 81/11

(45) Bekanntmachung des Hinweises auf die Patenterteilung:
28.09.83 Patentblatt 83/39

(84) Benannte Vertragsstaaten:
AT BE CH FR GB IT LI LU NL SE

(56) Entgegenhaltungen:
DE-A-1 405 513
DE-A-1 505 183
DE-B-1 201 703
DE-B-1 219 349
DE-B-1 255 525
DE-C-739 993

(73) Patentinhaber: STAHLGRUBER Otto Gruber GmbH &
Co., Einsteinstrasse 130, D-8000 München 80 (DE)

(72) Erfinder: Gottauf, Georg, Elektrastrasse 56,
D-8000 München 81 (DE)

(74) Vertreter: Huss, Carl-Hans, Dipl.-Ing. et al,
Rathausstrasse 14, D-8100 Garmisch-Partenkirchen
(DE)

BUNDESDRUCKEREI BERLIN

## Pflaster für die Reparatur von Fahrzeugreifen

### Stand der Technik

Reparaturpflastern für Fahrzeugreifen kommt allgemein die Aufgabe zu, den durch eine Schadenstelle im Reifen unterbrochenen Karkassenaufbau zu überbrücken. Wenn im Zuge der Reparatur vor dem Aufbringen des Pflasters auch eine Gummiausfüllung der Schadenstelle vorgenommen wurde, so soll das Pflaster auch die direkte Einwirkung der im Reifen eingeschlossenen Druckluft auf diese Ausfüllung abhalten. Zur Erfüllung dieser Aufgaben muß das Pflaster eine gewisse Festigkeit aufweisen, die grundsätzlich auf dem in den Kautschuk des Plasterkörpers eingebetteten Verstärkungskörper beruht, der aus übereinander gelegten Streifen aus parallel nebeneinander in Kautschuk eingebetteten Cordfäden besteht. Um eine ausreichende Festigkeit zu erzielen, wird der Verstärkungskörper je nach Reifengröße aus einer Mehrzahl von Verstärkungslagen aufgebaut, die aus übereinander liegenden oder kreuzweise, stern- oder rosettenartig übereinander gelegten Verstärkungsstreifen bestehen, wobei im allgemeinen die Länge und Breite der Verstärkungsstreifen in dem turmartigen Aufbau des Verstärkungskörpers zu- oder abnimmt.

Ein derartiger Pflasteraufbau, gemäß dem Oberbegriff des Anspruchs 1, geht aus der DE-C-739 993 und der DE-B-12 55 525 hervor.

Der Forderung nach ausreichender Festigkeit steht nun aber das Bestreben entgegen, derartige Reparaturpflaster möglichst leicht und von geringem Volumen auszuführen, weil jede durch eine Pflaster-Reparatur hervorgerufene Reifenquerschnittsverdickung eine das Auswuchten des Reifens erschwerende Unwucht entstehen läßt, die Elastizität des Reifens an der reparierten Stelle herabsetzt, die örtliche Erwärmung beim Fahren heraufsetzt und die Reparatur weiterer Schäden in der Nähe einer bereits reparierten Schadenstelle erschwert. Außerdem kann die Erhöhung der Festigkeit des Verstärkungskörpers zu einer unerwünschten Einbuße an Elastizität in der Randzone des Pflasters führen, und dies ist deshalb unerwünscht, weil gerade in jenem Randbereich der durch Vulkanisation fest mit der Umgebung der Schadenstelle verbundene Pflasterkörper die durch die Walkarbeit des gefahrenen Reifens entstehenden, in schnellem Wechsel sich vollziehenden Dehnungen und Stauchungen ohne Einrisse und Lösungserscheinungen im Verhältnis zum übrigen Pflasterkörper mitmachen muß.

Die Festigkeit eines Pflasters, von denen man ja je nach Größe des Reifens und Umfang der Schadenstelle kein größeres und festeres als für die Reparatur erforderlich nimmt, wird durch eine Lagenzahl angegeben, die durch die Anzahl der im Pflasterkern übereinander liegenden Lagen definiert ist.

Um die vorbeschriebenen Nachteile zu beheben, wurden bereits viele, im allgemeinen auf eine Verstärkung des Verstärkungskörpers oder des Kernes des Verstärkungskörpers, also der Pflastermitte, zielende Vorschläge gemacht. Viele dieser Vorschläge bestehen darin, diesen Kern mit einer zusätzlichen Gewebelage zu versehen (z. B. DE-PS-1 219 349, DE-OS-1 405 513).

Solche zur Erhöhung der Festigkeit des Pflasterkernes herangezogenen Gewebelagen haben jedoch den Nachteil, daß sie gegenüber dem sonst aus Cordlagen aufgebauten Verstärkungskörper wie ein die Dehnfähigkeit zu stark herabsetzender Fremdkörper wirken, daß sie teuer sind und die Bereitstellung eines zusätzlichen Werkstoffes bedingen und ein besonderes Werkzeug für einen besondersn Zuschnitt erfordern.

Alle Vorschläge die auf eine Erhöhung der Festigkeit des gesamten Pflasterkörpers abzielen oder den Kernbereich bis weit in die Außenzone zu erstrecken trachten, sind, abgesehen von der immer nachteiligen Verringerung der Flexibilität, nutzlos, weil der außerhalb der eigentlichen Schadenstelle liegende Bereich des Pflasters sowieso nur so viel Festigkeit aufzuweisen braucht, wie die durch Vulkanisation erreichte Verbindung zuläßt.

### Aufgabe

Der Erfindung liegt die Aufgabe zugrunde, ein Reifenpflaster an sich im Prinzip bekanten Aufbaues mit einem Verstärkungskörper aus Cordstreifen zu schaffen, der einen festen und verhältnismäßig steifen Kernbereich aufweist, aber in der Randzone verhältnismäßig dünn und elastisch bleiben kann, wobei das Verhältnis der Kernfestigkeit zur Randelastizität in weiten Grenzen variierbar ist. Dabei soll der Verstärkungskörper insgesamt aus Streifen gleichen Materials aufgebaut werden und für seinen Aufbau gegenüber bekannten Pflastern gleicher Festigkeit im Kernbereich Cordstreifenmaterial eingespart werden können.

Diese Aufgaben löst die Erfindung mit den in den Ansprüchen angegebenen Mitteln.

### Vorteile

Gegenüber bekannten und üblicherweise verwendeten Pflastern erhält man bei Anwendung der Erfindung einen Kernbereich gleicher Festigkeit durch die gleiche Zahl von hier übereinander liegenden Cordlagen und hat trotzdem in dem stärkeren Zug- und Schubbeanspruchungen ausgesetzten Randbereich weniger übereinander liegende Streifen. Ein aus sechs Lagen aufgebautes Kreuzpflaster vorbekannter Konstruktion besteht z. B. aus drei Paar stufenweise übereinander liegenden Streifen, so daß im Kernbereich des Verstärkungskörpers sechs Streifen und in den Randbereichen jeweils drei Streifen übereinander liegen. Demgegenüber liegen bei einem Pflaster nach der Erfindung im Kernbereich zwar ebenfalls sechs Streifenabschnitte übereinander, in der Randzone aber nur deren zwei. Die Folge ist, daß bei gleicher Kernfestigkeit und höherer Randzonen-Dehnbarkeit Cordmaterial eingespart werden kann.

Die geringere Masse im Randbereich des Verstärkungskörpers hat ferner zur Folge, daß die Reifenunwucht durch die Reparatur und ebenso eine örtliche Erhitzung vermindert wird.

Durch die größere Flexibilität im Randbereich wird auch der Einbau erleichtert. Das Pflaster läßt sich dann leichter der gekrümmten Innenform des Reifens anpassen und entsprechend durch Anrollen anpressen. Daß das Pflaster an allen Stellen homogen mit den Reifen verbunden ist, ist eine der wichtigsten Voraussetzungen für die Haltbarkeit der Reparatur.

### Erläuterung der Erfindung

Der Stand der Technik, von dem die Erfindung ausgeht, und die Erfindung selbst, ist, teils schematisch, in den Zeichnungen zur Anschauung gebracht und anhand dieser nachfolgend beschrieben. Es stellen dar:

Fig. 1 schematisch einen Querschnitt durch den Aufbau des Verstärkungskörpers eines Reifenpflasters nach dem Stand der Technik in sog. Kreuzform,

Fig. 2 eine der Fig. 1 entsprechende Darstellung des Aufbaues des Verstärkungskörpers eines Reifenpflasters nach der Erfindung.

Fig. 3 den Aufbau eines Vier-Lagen-Pflasters nach der Erfindung in einer Darstellung, in der die den Körper bildenden Streifen in der Höhe auseinandergezogen sind,

Fig. 4 einen Verstärkungskörper nach Fig. 3 in parallel-perspektivischer Ansicht,

Fig. 5a bis 5f schematisch verschiedene Möglichkeiten, die Festigkeit im Verstärkungskörperkern im Verhältnis zur Dehnungsmöglichkeit im Randbereich durch Anordnung und Gestaltung der Lagen zu variieren.

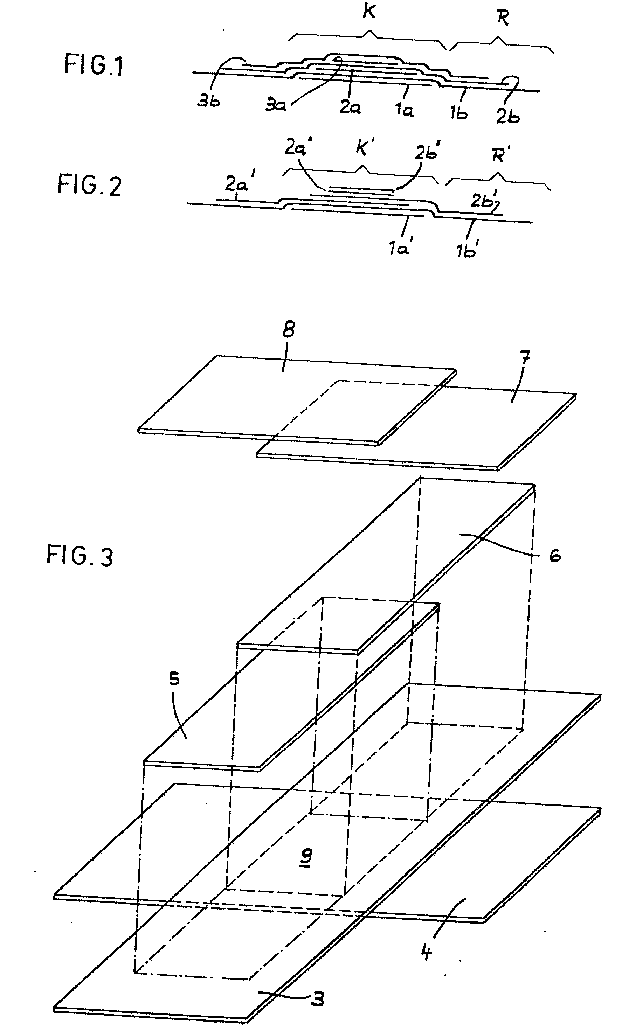

Fig. 1 zeigt sehr schamtisch einen aus sechs Lagen aufgebauten Verstärkungskörper eines Reifenpflasters nach dem Stande der Technik. Die Basis des dargestellten Verstärkungskörpers besteht aus zwei Streifen 1a und 1b jeweils gleicher Länge und Breite, von denen hier angenommen ist, daß sie rechtwinklig übereinander liegen, so daß man in der Fig. 1 die Länge aus dem Streifen 1b und die Breite aus dem Streifen 1a erkennen kann. Die zweite über der Basis liegende Stufe besteht aus den Streifen 2a und 2b, die, wie aus Fig. 1 zu erkennen, kürzer und schmäler als die Streifen 1a und 1b sind, aber, soweit das ihre Länge und Breite zuläßt, die Streifen 1a und 1b der Basis durchgehend überdecken. Entsprechend besteht die dritte Stufe aus zwei weiteren »durchgehenden« Streifen 3a und 3b jeweils gleicher, aber gegenüber den Streifen 2a und 2b geringeren Länge und Breite. Demgemäß liegen im Kernbereich K des Verstärkungskörpers und damit auch des Reifenpflasters, der nach vollendeter Reparatur die Schadenstelle abdeckt und hier den Karkassenaufbau des reparierten Reifens überbrückt, sechs Abschnitte der Streifen 1a, 1b, 2a, 2b, 3a und 3b übereinander, während in der Randzone R jeweils drei Streifen, nämlich entweder die Streifen 1a, 2a und 3a oder die Streifen 1b, 2b und 3b übereinander liegen. Vielfach wurde es, was Fig. 1 nicht darstellt, für erforderlich gehalten, zusätzlich verstärkende, aus Ketten und Schuß bestehende, dem Gesamtpflasterumfang im wesentlichen folgende, also nicht nur streifenförmige Schichten oder Lagen in den Pflasteraufbau zu inkorporieren oder auf den Verstärkungskern eine solche in Länge und Breite diesen Kern abdeckende Gewebelage vor dem Einvulkanisieren des Verstärkungskörpers in Kautschuk aufzulegen.

Aus der der Darstellung nach Fig. 1 im Prinzip gleichen Darstellung nach Fig. 2 ist ersichtlich, daß ein Verstärkungskörper eines erfindungsgemäßen Plasters zunächst ebenso wie das vorbekannte Pflaster nach Fig. 1 aus einer Basis, bestehen aus den Streifen 1a' und 1b' aufgebaut ist. Dem einen durchgehenden Streifen 2b nach Fig. 1 entspricht aber hier ein aus zwei Streifenstücken 2a' und 2b' zusammengesetzter Streifen, die sich im Kernbereich K' überlappen, und dem streifen 2a nach Fig. 1 entspricht ebenso ein aus zwei im Kernbereich sich überlappenden Streifenstücken 2a'' und 2b'' zusammengesetzter Streifen.

Der Verstärkungskörper nach Fig. 2 ist also, von der Basis abgesehen, nur aus einer Stufe, hier aus zwei Streifen bestehend, aufgebaut und weist trotzdem im Kernbereich K' sechs übereinander liegende Cordstreifenbereiche auf, nämlich die inneren Endbereiche der Streifenstücke 1a', 1b', 2a', 2b', 2a'' und 2b'', im Randbereich R' dagegen nur jeweils zwei übereinanderliegende Teile von Streifen, nämlich entweder der Streifenstücke 1a' und 2a'' oder 1b' und 2b' oder 1a' und 2b'' oder 1b' und 2a'. Bei gleicher Kernfestigkeit ist also das Pflaster nach der Erfindung in der Randzone wesentlich elastischer und dehnbarer als ein vergleichbares vorbekanntes Pflaster.

Fig. 3 stellt in parallel-perspektivischer Ansicht die übereinanderliegenden Streifen 3 und 4 dar, die in an sich bekannter Weise die Basis bilden. Auf diese Basis, beim dargestellten Beispiel auf den Cordstreifen 3 derselben, werden dann zunächst für die zweite Stufe die Streifenstücke 5 und 6 und darauf in Richtung des Basisstreifens 4 die in Länge und Breite den Streifenstücken 5 und 6 entsprechenden Streifenstücke 7 und 8 zur Vervollständigung der zweiten Stufe aufgelegt, und zwar derart, daß sich die Stücke 5 und 6 des einen Streifens ebenso wie die Stücke 7 und 8 des anderen Streifens im Kernbereich 9 der Basis überlappen.

Die Fig. 3 kann auch dazu dienen, prinzipiell gleich aufgebaute Pflaster für Radialreifen zu erläutern, die sich entsprechend dem Karkassenaufbau der zu reparierenden Reifen dadurch auszeichnen, daß alle ihre Cordstreifen nur in einer Richtung liegen. Ein Pflaster mit drei Lagen also kann dann z. B. aus den Streifen 3 sowie 5+6 oder 4 sowie 7+8 zusammengesetzt sein, das dann gegenüber einem Pflaster vorbekannter Bauart gleicher Kernstärke am Rand nur zwei gegenüber drei Überlappungen aufweist.

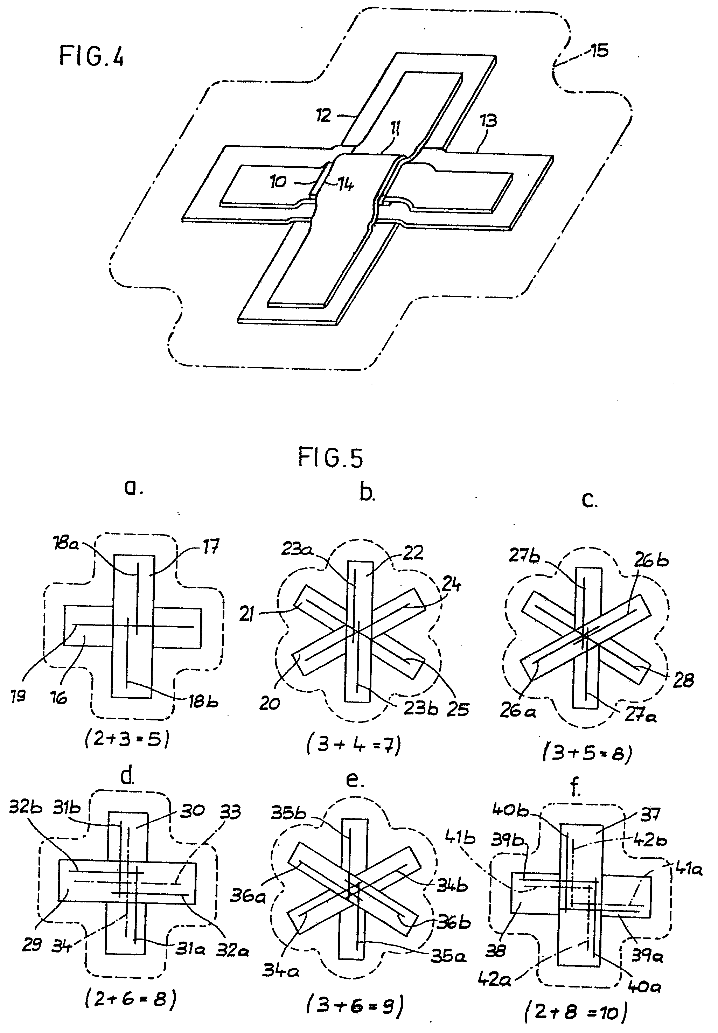

Fig. 4 veranschaulicht, daß zum Aufbau eines stufenförmig aufgebauten Kernbereichs des Verstärkungskörpers die in diesem Kernbereich liegenden inneren Querkanten 10, 11 in der Regel bis verhältnismäßig nahe an die ihnen zugewandten, parallel zu ihnen verlaufenden Längskanten 12, 13 der Streifen der Basis bzw. bei mehr als zwei Stufen der jeweils darunterliegenden Stufe heranreichen, und die abgewandte parallele Längskante 14 des darüber oder darunterliegenden Streifenstücks überragen werden. Die Erfindung erlaubt jedoch eine gewisse Variationsbreite des Verhältnisses des steiferen Kernbereiches zum demgegenüber elastischeren Randbereich, z. B. indem man die Überlappung und/oder Streifenbreite gegenüber der Darstellung nach Fig. 4 verändert.

Die aus Fig. 3 ersichtliche Reihenfolge des Aufbaues braucht nicht unbedingt eingehalten zu werden; es können z. B. auch hintereinander die Streifen 5, 7, 6 und 8 auf die Basis aufgelegt werden, denn auch dann ist in einer Richtung jeweils ein aus zwei Streifenstücken bestehender »durchgehender« Streifen mit sich im Kernbereich überlappenden Bereichen vorhanden.

Mit 15 ist strichpunktiert eine der möglichen Umrißlinien eines Pflasterkörpers angedeutet. Das Pflaster wird in üblicher weise dadurch hergestellt, daß man auf eine Platte mit der Außenkontur des Pflasters den Verstärkungskörper turmartig aufbaut und auf diesen eine Deckplatte auflegt und dem Ganzen durch Druck die leicht bomierte Pflasterform verleiht.

Durch eine Kombination von aus zwei Stücken zusammengesetzten Streifen mit einstückigen, durchgehenden Streifen sowohl in einer als auch in verschiedenen Stufen und/oder eine Vervielfachung der Zahl der Streifen für den Aufbau der Basis läßt sich die Gesamtzahl der Streifen und das Verhältnis der sich im Kernbereich eines Verstärkungskörpers überlappenden Streifenabschnitte zu den im Randbereich übereinanderliegenden Streifenteilen beliebig variieren. So kann z. B. bei einem Verstärkungskörper für ein Pflaster nach Fig. 3 die auf die Basis 3, 4 aufgelegte zweite Stufe aus einem aus zwei Stücken 5, 6 bestehenden Streifen und einem die Streifenstücke 7 und 8 ersetzenden, durchgehenden, einstückigen Streifen aufgebaut sein, in welchem Falle der Kernbereich aus fünf übereinanderliegenden Streifenteilen und der Randbereich weiterhin aus je zwei übereinanderliegenden Teilen besteht.

Einige Variationsmöglichkeiten sind stark schematisiert in den Fig. 5a bis 5f in der Aufsicht zur Anschauung gebracht, wobei die Basis jeweils durch rechteckige Streifen dargestellt ist, während die die weiteren Stufen bildenden Streifen nur durch Striche gekennzeichnet und die Anzahl der Basisstreifen (erste Zahl) und der im Kernbereich übereinanderliegenden Streifenteile der weiteren Stufen (zweite Zahl) ergebende Gesamtzahl der in diesem Kernbereich übereinander im Verstärkungskörper vorhandenen Streifenteile (dritte Zahl) jeweils in Klammern gesetzt ist.

So besteht z. B. der Verstärkungskörper eines sog. Kreuzpflasters nach Fig. 5a aus der aus den Streifen 16 und 17 zusammengesetzten Basis, während die zweite Stufe einen aus den Streifenstücken 18a und 18b zusammengesetzten und einen durchgehenden Streifen 19 enthält, so daß im Kernbereich des Verstärkungskörpers insgesamt fünf Lagen übereinanderliegen. Die Basis des Verstärkungskörpers nach Fig. 5b besteht demgegenüber aus drei sternförmig übereinander gelegten Streifen 20, 21 und 22 und die folgende Stufe aus einem aus zwei Streifenstücken 23a und 23b zusammengesetzten Streifen sowie zwei weiteren durchgehenden, einstückigen Streifen 24 und 25, so daß sich im Kernbereich des Verstärkungskörpers insgesamt sieben Streifenteile decken, im Randbereich dagegen weiterhin jeweils zwei Streifenteile übereinander liegen.

Aus dem Verstärkungskörper nach Fig. 5b ist der nach Fig. 5c entwickelt, bei dem jedoch zwei Streifen der zweiten Stufe aus zwei Stücken, nämlich den Streifenstücken 26a, 26b bzw. 27a, 27b zusammengesetzt sind, während der dritte, die zweite Stufe vervollständigende Streifen 28 einstückig durchgehend ausgeführt ist, so daß im Kernbereich insgesamt acht Streifenteile übereinanderliegen. Auf die gleiche Zahl von den Kernbereich formenden Streifenteilen kann man auch gelangen, wenn man nach Fig. 5d bei einem Kreuzpflaster auf die Basis 29, 30 zwei weitere Stufen aufbaut, wobei die zweite Stufe aus den Streifenstücken 31a, 31b und 32a, 32b und die dritte Stufe aus zwei durchgehenden, entsprechend schmäleren und kürzeren Streifen 33 und 34 aufgebaut ist. Unterschiedlich zu dem Verstärkungskörper nach Fig. 5c besteht jedoch hier die Randzone aus jeweils drei übereinanderliegenden Streifenteilen, beispielsweise den Streifenteilen der Streifen bzw. Streifenstücke 29, 32a und 33.

Wenn man bei einem Verstärkungskörper nach Fig. 5c den durchgehenden Streifen 28 der zweiten Stufe gegen einen aus zwei Streifenstücken zusammengesetzten Streifen austauscht, also die zweite Stufe aus den Streifenstücken 34a, 34b, 35a und 35b sowie 36a und 36b zusammensetzt, erhält man ein Neun-Lagen-Pflaster, das aber im Randbereich wiederum jeweils nur zwei übereinanderliegende Streifenteile aufweist. Ebenso läßt sich aus der Anordnung nach Fig. 5d die nach Fig. 5f entwikkeln, bei der der Verstärkungskörper aus der Basis 37, 38 besteht, auf die eine erste Stufe aus sich überlappenden Streifenstücken 39a, 39b und 40a, 40b aufgelegt ist, auf die eine dritte Stufe aus den Streifenstücken 41a, 41b bzw. 42a, 42b folgt, so daß der Kernbereich des Verstär- kungskörpers zehn übereinanderliegende Strei- fenbereiche und die Randzone jeweils drei übereinanderliegende derartige Bereiche enthält.

Je nach dem, ein welcher Stelle im Reifen sich die zu reparierende Schadenstelle befindet, ob also in der Lauffläche oder im Reifenwulst oder dazwischen, können Pflaster verschiedener Umrißform zweckmäßig sein, und es ist deshalb nicht erforderlich, daß die Streifen, die jeweils eine Stufe bilden, unter sich gleiche Länge haben. Es kann also z. B. ein Pflaster einen Verstärkungskörper aufweisen, der beispielsweise gemäß Fig. 3 und 4 aufgebaut ist, bei dem jedoch die Streifen 4 sowie 7+8 kürzer als die Streifen 3 sowie 5+6 sind.

**Patentansprüche**

1. Pflaster für die Reparatur von Fahrzeugreifen, bestehend aus einem in vulkanisierten oder unvulkanisierten Kautschuk eingebetteten Verstärkungskörper, der aus übereinanderliegenden Streifen (3—8) aus in Kautschuk eingebetteten, parallel nebeneinanderliegenden Cordfäden derart aufgebaut ist, daß auf eine Basis (3, 4) mindestens eine weitere Stufe aus einer der Basis entsprechenden Zahl von Streifen geringerer Länge und Breite folgt, dadurch gekennzeichnet, daß mindestens einer der Streifen der auf die Basis (3,4) folgenden weiteren Stufen aus je zwei sich im Kernbereich (9) des Verstärkungskörpers überlappenden Streifenstücken (5+6 bzw. 7+8) zusammengesetzt ist.

2. Pflaster nach dem Anspruch 1, dadurch gekennzeichnet, daß die im Kernbereich (9) liegenden Querkanten (10, 11) der Streifenstücke verhältnismäßig nahe an die parallel zu ihnen liegenden Längskanten (12, 13) der Streifen der Basis bzw. bei mehr als zwei Stufen der jeweils darunterliegenden Stufe heranreichen, aber nicht über diese hinausgehen.

**Claims**

1. Patch for the repair of vehicle tires, consisting of a reinforcement body embedded in vulcanized or nonvulcanized rubber and being composed of superimposed strips (3—8) of side by side rubber embedded cord threads in such manner, that on a base (3, 4) follows at least one further ply of shorter and narrower strips corresponding in numer with that of the base, characterized in that at least one of the strips of the further plies following on the base (3, 4) is assembled by each two strips portions (5+6 or 7+8 respectively) overlapping in the core area (9) of the reinforcement body.

2. Patch according to claim 1, characterized in that the transverse edges (10, 11) of the strip portions in the core area (9) extend relatively close to the parallel running longitudinal edges (12, 13) of the strips of the base or, respectively if there are more than two plies, to those of the next lower ply, but do not surpass them.

**Revendications**

1. Emplâtres pour la réparation de bandages de véhicules, comprenant une pièce de renforcement qui est incorporée dans du caoutchouc vulcanisé ou non vulcanisé et est constituée de bandes (3—8) qui sont formées de fils de corde mutellement parallèles noyés dans le caoutchouc et superposées de façon que sur une base (3, 4) soit appliqué au moins un autre étage composé d'un nombre, correspondant à la base, de bandes de plus faibles largeur et épaisseur, caractérisés par le fait qu'au moins une des bandes des autres étages appliqués sur la base (3, 4) est constituée par deux tronçons de bandes (5+6) et (7+8) se chevauchant dans la zone centrale (9) de la pièce de renforcement.

2. Emplâtres selon la revendications 1, caractérisés par le fait que les arêtes transversales (10, 11) se trouvant dans la zone centrale (9), des tronçons de bande, se rapprochent relativement près des arêtes longitudinales (12, 13), qui leur sont parallèles, des bandes de la base ou, en cas de plus de deux étages, de l'étage situé en dessous, mais ne les dépassent pas.

0 025 180

FIG.1

FIG.2

FIG.3

FIG.4

FIG.5

a.

(2+3=5)

b.

(3+4=7)

c.

(3+5=8)

d.

(2+6=8)

e.

(3+6=9)

f.

(2+8=10)